# EUROPEAN PATENT SPECIFICATION

(11) **EP 2 869 647 B1**
(45) Date of publication and mention of the grant of the patent: **21.10.2020**
(21) Application number: 14185688.0
(22) Date of filing: 22.09.2014
(51) Int. Cl.: H04W 64/00, H04W 24/10

(54) **Mobility state estimate or mobility history information reporting**
Mobilitätszustandsschätzung oder Mobilitätsverlaufsinformationsdarstellung
Rapport d'estimation d'état de mobilité ou informations d'historique de mobilité

(30) Priority: 31.10.2013 US 201361897938 P
(43) Date of publication of application: 06.05.2015
(73) Proprietor: Nokia Technologies Oy, 02610 Espoo (FI)
(72) Inventor: Koskinen, Jussi-Pekka, 90420 Oulu (FI); Keskitalo, Ilkka, 90240 Oulu (FI); Kaikkonen, Jorma, 90800 Oulu (FI); Dalsgaard, Lars, 90230 Oulu (FI)
(74) Representative: Ruuskanen, Juha-Pekka

(56) References cited:
- WO-A1-2013/138995
- US-A1- 2013 084 910
- ERICSSON ET AL: "Mobility information at RRC Connection Establishment", 3GPP DRAFT; R2-132682 - MOBILITY INFORMATION AT RRC CONNECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718280, Retrieved from the Internet: URL:http://www.3gpp.org/ftp/tsg_ran/WG2_RL 2/TSGR2_83/Docs/ [retrieved on 2013-08-09]

## Description

### BACKGROUND:

### Field:

Certain embodiments generally relate to wireless communication systems, such as, but not limited to, the Universal Mobile Telecommunications System (UMTS) Terrestrial Radio Access Network (UTRAN), Long Term Evolution (LTE) Evolved UTRAN (E-UTRAN), and/or LTE-Advanced (LTE-A). For example, some embodiments may relate to heterogeneous networks, which may combine elements of the above and other wireless systems.

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN) no RNC exists and most of the RNC functionalities are contained in the enhanced node B (eNodeB, also called E-UTRAN Node B).

Long Term Evolution (LTE) or E-UTRAN refers to improvements of the UMTS through improved efficiency and services, lower costs, and use of new spectrum opportunities. In particular, LTE is a 3rd generation partnership project (3GPP) standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD). Advantages of LTE are, for example, high throughput, low latency, FDD and TDD support in the same platform, an improved end-user experience, and a simple architecture resulting in low operating costs.

Further releases of 3GPP LTE (e.g., LTE Rel-11, LTE-Rel-12) are targeted towards future international mobile telecommunications advanced (IMT-A) systems, referred to herein for convenience simply as LTE-Advanced (LTE-A). LTE-A is directed toward extending and optimizing the 3GPP LTE radio access technologies. A goal of LTE-A is to provide significantly enhanced services by means of higher data rates and lower latency with reduced cost. LTE-A will be a more optimized radio system fulfilling the international telecommunication union-radio (ITU-R) requirements for IMT-Advanced while keeping the backward compatibility.

In wireless communications, a heterogeneous network (HetNet) is a network where different types of nodes are participating in the communication. HetNet may be considered as a network with complex interoperation between macrocell, small cell, and in some cases WiFi network elements used together to provide a mosaic of coverage, with handoff capability between network elements. For instance, the HetNet scenarios in cellular communication systems are scenarios with different types of base stations (BSs). For example, besides the most common rooftop or mast located macro BSs, the HetNet scenario in the 3rd Generation Partnership Project (3GPP) takes into account the deployment of small outdoor pico BSs and even smaller home or femto BSs.

Compared to macro BSs, the pico and femto BSs have lower transmission power, for example 3GPP defines maximum transmission power for pico BS and femto BS to stay within ±2dB from the rated output power of 24dBm and 20dBm, respectively. These values are per carrier and correspond to single antenna port - doubling the number of antenna ports reduces the limit by 3dB. For a macro BS, the output power is limited by spectrum regulations. A typical output power value for a macro BS is 46dBm. The main purpose behind deployment of pico and femto BSs is to bring higher data rates to user equipment (UEs) that are connected to them and to offload traffic from the macro BSs. International patent publication no. WO 2013/138995 relates to a method and apparatus for dormant state determination. "Mobility information at RRC Connection Establishment", Eriksson, ST-Eriksson (R2-132682), relates to heterogeneous network mobility enhancements for LTE. US patent publication no 2013/0084910 relates to enhancement and improvement for HetNet deployments.

### SUMMARY:

One embodiment includes a method of improved reporting of mobility information. The method may include reporting, by a user device, mobility information to an associated network. The method includes indicating one or more time periods during which the user device has been out of the service coverage of the network. The indicating comprises adding an identifier to the mobility information to indicate a time spent by the user device out of the service coverage of the network.

Another embodiment includes an improved method for receiving mobility information. The method may include receiving, by a network node, mobility information from a user device. The receiving of the mobility information includes receiving an indication of one or more time periods during which the user device has been out of the service coverage of the network and receiving an identifier within the mobility information to indicate a time spent by the user device out of the coverage of the network.

Another embodiment is directed to an apparatus including at least one processor, and at least one memory comprising computer program code. The at least one memory and the computer program code are configured, with the at least one processor, to cause the apparatus at least to report mobility information to an associated network, and to indicate one or more time periods during which the UE has been out of the service coverage of the network and add an identifier to the mobility information to indicate a time spent by the user device out of the service coverage of the network.

Another embodiment is directed to an apparatus including at least one processor, and at least one memory comprising computer program code. The at least one memory and the computer program code are configured, with the at least one processor, to cause the apparatus at least to receive mobility information from a user device. The receiving of the mobility information may further include receiving an indication of one or more time periods during which the user device has been out of the service coverage of the network and receiving an identifier within the mobility information to indicate a time spent by the user device out of the coverage of the network.

Another embodiment is directed to an apparatus including means for reporting mobility information to an associated network. The apparatus includes means for indicating one or more time periods during which the user device has been out of the service coverage of the network. The means for indicating comprises means for adding an identifier to the mobility information to indicate a time spent by the user device out of the service coverage of the network.

Another embodiment is directed to an apparatus including means for receiving mobility information from a user device. The apparatus may further include means for receiving an indication of one or more time periods during which the user device has been out of the service coverage of the network and receiving an identifier within the mobility information to indicate a time spent by the user device out of the coverage of the network.

Another embodiment is directed to a computer program embodied on a computer readable medium. The computer program may be configured to control a processor to perform a process including reporting mobility information to an associated network. The process includes indicating one or more time periods during which the user device has been out of the service coverage of the network. The indicating comprises adding an identifier to the mobility information to indicate a time spent by the user device out of the service coverage of the network.

Another embodiment is directed to a computer program embodied on a computer readable medium. The computer program may be configured to control a processor to perform a process including receiving mobility information from a user device. The receiving of the mobility information may further include receiving an indication of one or more time periods during which the user device has been out of the service coverage of the network and receiving an identifier within the mobility information to indicate a time spent by the user device out of the coverage of the network.

### BRIEF DESCRIPTION OF THE DRAWINGS:

For proper understanding of the invention, reference should be made to the accompanying drawings, wherein:
Fig. 1 illustrates an example logged measurement reporting with an added indication, according to an embodiment;
Fig. 2a illustrates an apparatus according to one embodiment;
Fig. 2b illustrates an apparatus according to another embodiment;
Fig. 3 illustrates a flow diagram of a method according to one embodiment; and
Fig. 4 illustrates a flow diagram of a method according to another embodiment.

### DETAILED DESCRIPTION:

It will be readily understood that the components of the invention, as generally described and illustrated in the figures herein, may be arranged and designed in a wide variety of different configurations. Thus, the following detailed description of the embodiments of systems, methods, apparatuses, and computer program products for an optimized procedure, signaling, and configuration for the reporting of a mobility state estimate (MSE) and/or mobility history information, as represented in the attached figures, is not intended to limit the scope of the invention, but is merely representative of selected embodiments of the invention.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments. Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

3GPP is working on enhancements for HetNet (which as mentioned above refers to a mixture of deployed cell types, macro/pico) mobility in order to make the mobility more robust in future network deployment scenarios.

Further, 3GPP is studying solutions that would minimize signaling overhead and UE power consumption with infrequent and frequent small data transfer. Such traffic is typical, for example for Machine Type Communication (MTC) devices, but also for smart phones for example when they generate only background traffic. The inter-arrival of traffic bursts may vary a good deal; for MTC devices intervals can be tens of seconds, minutes, days or even weeks, whereas with smart phones the intervals may be counted in seconds or tens of minutes.

The data amount per burst may be small which may result in high signaling overhead with respect to transferred payload data. In order to minimize the signaling overhead in such irregular traffic, it is beneficial to utilize the mobility information, in addition to traffic pattern, as the input when deciding whether to release the connection or keep the UE in connected mode.

Mobility information is also useful when trying to optimize the offloading possibilities in the HetNet environment, i.e., whether to hand over the UE to small cells for traffic offloading or if it would be better to keep the UE connected to macro cell. Mobility information could also be used by the network for selecting the proper configuration (mobility parameters, measurement configurations, DRX configurations, etc.) for the UE. For this purpose, 3GPP RAN2 has agreed to introduce reporting of UE mobility information at the connection setup.

Certain embodiments of the invention introduce an optimized procedure, signaling and configuration for the reporting of the MSE or mobility history information.

It is currently agreed that the UE reports an indicator of availability of visited cell history, and the UE reports the mobility state estimated by the MSE, if the MSE was configured. The network may retrieve the visited cell history upon receiving the indication of availability of visited cell history. The visited cell history may comprise cells visited while the UE was IDLE, and it is for further study whether the visited cell history comprises cells visited while the UE was CONNECTED. The visited cell history may also comprise time of stay and physical cell IDs of the visited cells, and it is for further study what the granularity of the time information should be and how many cells the history information should cover and whether the network can request the number it would like to be reported. Further, the information may include the carrier frequency of the cell where the user equipment has visited. On different carrier frequencies the set of cell IDs can be independent. Hence, in order to avoid ambiguity with the cell IDs, the carrier frequency information may be added. Yet another information may be the public land mobile network (PLMN) ID which would reveal the network where the UE has been camping or connected to during the reporting period.

In certain situations, it may occur that the UE is out of the LTE coverage area or completely out-of-coverage, for example, for a short duration. Currently, there is no mechanism for how this situation should be accounted in mobility history information reporting. There may be specific definition for the time of stay, i.e., how the user equipment should measure the duration of staying in one cell. This means that there should be a definition for the event which starts and stops the counting for the time of stay in a cell.

Timer or time started, for example, with the following triggers:
- When "camped normally" state is entered in IDLE mode: For example, after cell selection / cell reselection / returning to idle mode after RRC connection.
- When "camped on any cell" state is entered in IDLE mode.
- After successful PLMN selection / cell selection / cell reselection timer or time could be evaluated only when camping on suitable cell.
- Optionally camping on acceptable cell could be considered.

Timer or time may be stopped for example based on following triggers:
- When "camped normally" state is entered in IDLE mode: For example, after cell selection / cell reselection / returning to idle mode after RRC connection.
- When "camped on any cell" state is entered in IDLE mode.
- After successful PLMN selection / cell selection / cell reselection.
- When "Any cell selection" state is entered.

Optionally there may be a separate configuration for the time of stay timer. There can be for example separate configurations for different radio access technologies (E-UTRAN, UTRAN, GERAN, etc). The reporting may also be conditional, i.e., related to the configuration.

Related to reporting of HetNet mobility information, in 3GPP RAN2, it has been proposed either to include the mobility information in the connection setup complete-message, or Indicate the availability of mobility information and reporting would happen on request by the eNB. Two basic options for the mobility information have been proposed. A first option is mobility state estimate (MSE) where the UE reports normal/medium/high mobility based on the cell changes during an observation window. A second option is mobility history information where the UE reports the cell IDs and time spent in the cells.

If the reporting is to be done by request of the eNB, it has been proposed that there is a separate indication about the availability of the history information. This would be analog to RLF or RACH reporting. Further, it has been proposed that the UE would first report MSE and, if the network considers MSE as insufficient or unreliable, it may proceed by requesting the mobility history information.

According to an embodiment, when the UE reports mobility information (e.g., MSE state and/or history information) and the UE has been out of the service coverage of the radio access technology (RAT) or communications system where the given mobility history information is to be reported, the UE may indicate the occasions and/or time periods when the UE has been out of coverage. For example, this could be achieved, in one embodiment, by adding a specific identifier to the reported history information indicating the time spent in out of service coverage.

Alternatively or additionally, in an embodiment, the indication could also be in the form of reporting accumulated out of service time. For example, the UE may indicate that, during the reporting period, it has also been out of service together with the total accumulated time it was out of service. In addition, according to one embodiment, the UE may indicate in conjunction with the reporting procedure that the UE has been out of service within the given time window or if the UE has been out of the service in between the number of cells to be included in the history information.

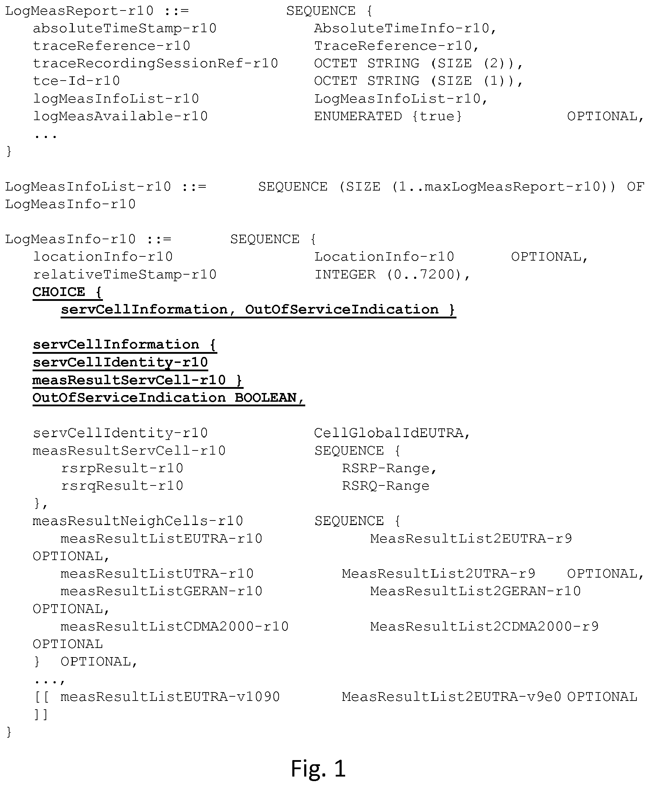

As an example, Fig. 1 illustrates using the logged measurement reporting as a baseline (captured from UEInformationResponse message in 3GPP TS36.331) where the underlined portion of Fig. 1 may be added to convey the information regarding the UE out of service (OoS). This example assumes that the minimization of drive tests (MDT) related reporting format would be used as a baseline; however, it could also be possible to use other reporting format(s) according to certain embodiments.

For example, another format could include an additional option in cell id field which would indicate the OoS as follows:
MobilityHistoryInformation (E-UTRAN cells limited to max *M* cells as an example but could also be time T)
∘ N: Cell id#n, TimeOfStay#n
∘ N+1: Cell id#n+1, TimeOfStay#n +1
∘ N+2: OoSindication, TimeOfStay#n +2
∘ ...
∘ N+*M*

Therefore, the indication and accumulated out of service time could be realized in a rather similar manner as illustrated above.

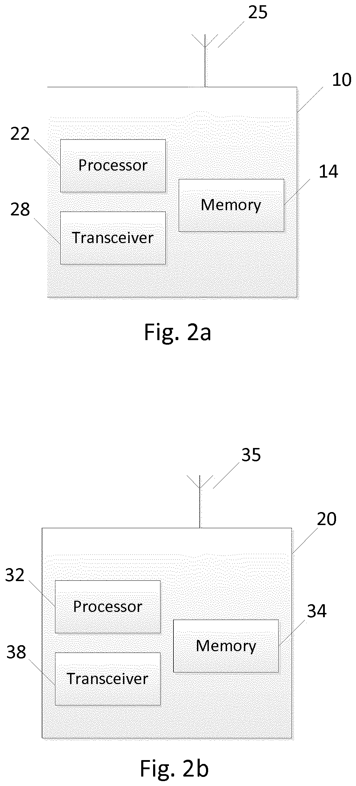

Fig. 2a illustrates an example of an apparatus 10 according to an embodiment. In one embodiment, apparatus 10 may be a UE or mobile device. Further, it should be noted that one of ordinary skill in the art would understand that apparatus 10 may include components or features not shown in Fig. 2a.

As illustrated in Fig. 2a, apparatus 10 includes a processor 22 for processing information and executing instructions or operations. Processor 22 may be any type of general or specific purpose processor. While a single processor 22 is shown in Fig. 2a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 further includes a memory 14, which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include one or more antennas 25 for transmitting and receiving signals and/or data to and from apparatus 10. Apparatus 10 may further include a transceiver 28 configured to transmit and receive information. For instance, transceiver 28 may be configured to modulate information on to a carrier waveform for transmission by the antenna(s) 25 and demodulate information received via the antenna(s) 25 for further processing by other elements of apparatus 10. In other embodiments, transceiver 28 may be capable of transmitting and receiving signals or data directly.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a UE or mobile device associated with a network. In this embodiment, apparatus 10 may be controlled by memory 14 and processor 22 to report mobility information and, when apparatus 10 has been out of service coverage of the network, to indicate one or more time period(s) during which apparatus 10 was out of the service coverage of the network. In an embodiment, the indication of the time period(s) during which apparatus 10 was out of the service coverage of the network may be included in the mobility information report. According to certain embodiments, the mobility information may be a MSE and/or mobility history information.

According to one embodiment, apparatus 10 may be controlled to indicate the one or more time period(s) during which it was out of the service coverage of the network by adding an identifier to the mobility information indicating the time spent out of the service coverage. In another embodiment, apparatus 10 may be alternatively or additionally controlled to indicate the total accumulated out of service time for apparatus 10.

Fig. 2b illustrates an example of an apparatus 20 according to another embodiment. In an embodiment, apparatus 20 may be a base station or access point in a communications network such as, but not limited to, an eNB in LTE. It should be noted that one of ordinary skill in the art would understand that apparatus 20 may include components or features not shown in Fig. 2b.

As illustrated in Fig. 2b, apparatus 20 includes a processor 32 for processing information and executing instructions or operations. Processor 32 may be any type of general or specific purpose processor. While a single processor 32 is shown in Fig. 2b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 further includes a memory 34, which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

Apparatus 20 may also include one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulate information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a base station or access point in a communications network. In this embodiment, apparatus 20 may be controlled by memory 34 and processor 32 to receive a mobility information report from a UE. When the UE has been out of service coverage of apparatus 20, apparatus 20 may be further controlled to receive an indication of one or more time period(s) during which the UE was out of its service coverage. In an embodiment, the indication of the time period(s) during which the UE was out of the service coverage of apparatus 20 may be included in the mobility information report. According to certain embodiments, the mobility information may be a MSE and/or mobility history information.

According to one embodiment, apparatus 20 may be controlled to receive an indication of the one or more time period(s) during which the UE was out of the service coverage of the network by an added identifier included in the mobility information that indicates the time spent out of the service coverage. In another embodiment, apparatus 20 may be alternatively or additionally controlled to receive an indication of the total accumulated out of service time for the UE.

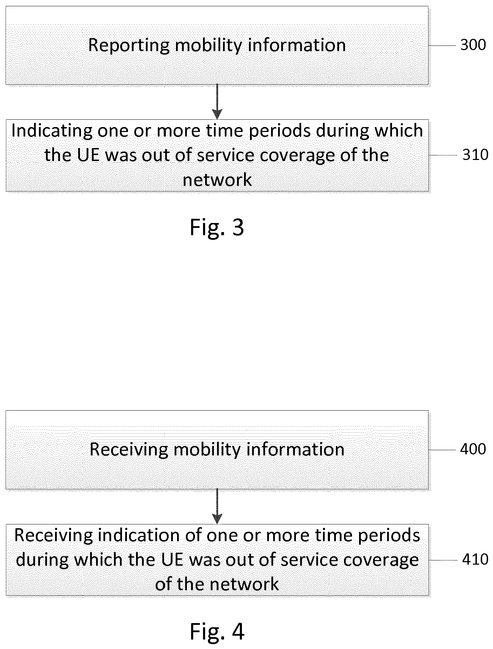

Fig. 3 illustrates an example flow diagram of a method according to one embodiment. In an embodiment, the method of Fig. 3 may be executed by a UE. The method may include, at 300, reporting mobility information to an associated network. The method may further include, at 310, indicating one or more time periods during which the UE has been out of the service coverage of the network. As mentioned above, the indicating of the one or more time period(s) during which the UE was out of the service coverage of the network may include adding an identifier to the mobility information indicating the time spent out of the service coverage. In another embodiment, the indicating may further include indicating the total accumulated out of service time for the UE.

Fig. 4 illustrates an example flow diagram of a method according to another embodiment. In an embodiment, the method of Fig. 4 may be executed by a base station. The method includes, at 400, receiving mobility information from a UE. The method may further include, at 410, receiving an indication of one or more time periods during which the UE has been out of the service coverage of the network. As outlined above, the one or more time period(s) during which the UE was out of the service coverage of the network may be indicated by adding an identifier to the mobility information indicating the time spent out of the service coverage. In another embodiment, the receiving of the indication may further include receiving an indication of the total accumulated out of service time for the UE.

In some embodiments, the functionality of any of the methods described herein, such as those illustrated in Figs. 3 or 4 discussed above, may be implemented by software and/or computer program code stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

As a result of certain embodiments discussed above, the network is able to better benefit from the mobility history information.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

## Claims

1. A method performed by a user device, the method comprising:
reporting (300) mobility information to an associated network; and
indicating (310) one or more time periods during which the user device has been out of service coverage of the network, wherein the indicating comprises adding an identifier to the mobility information to indicate a time spent by the user device out of the service coverage of the network, wherein the indication of the one or more time periods during which the user device has been out of service coverage of the network is included in the mobility information report.

2. The method according to claim 1, wherein the mobility information comprises a mobility state estimate MSE.

3. The method according to claims 1 or 2, wherein the mobility information comprises mobility history information.

4. The method according to any one of claims 1-3, wherein the indicating further comprises indicating a total accumulated out of service time for the user device.

5. The method according to claim 3, wherein the history information further comprises a set of cell identifiers and out of service indications associated with the time spent in a cell or out of coverage.

6. A method performed by a network node, the method comprising:
receiving (400) mobility information from a user device associated with a network;
wherein the receiving of the mobility information further comprises receiving (410) an indication of one or more time periods during which the user device has been out of the service coverage of the network and receiving an identifier within the mobility information to indicate a time spent by the user device out of the coverage of the network.

7. The method according to claim 6, wherein the mobility information comprises a mobility state estimate MSE.

8. The method according to claims 6 or 7, wherein the mobility information comprises mobility history information.

9. The method according to any one of claims 6-8, wherein the receiving further comprises receiving a total accumulated out of service time for the user device.

10. The method according to claim 8, wherein the history information further comprises a set of cell identifiers and out of service indications associated with the time spent in a cell or out of coverage.

11. The method according to any one of claims 6-10, wherein the network node comprises an evolved node B eNB.

12. An apparatus comprising means for performing the steps of a method according to any of claims 1-5 or any of claims 6-11.

13. A non-transitory computer readable medium encoded with instructions that, when executed by a processor associated with a user device or with a network node, perform, respectively, the corresponding steps of the method of any of claims 1-5 or any of claims 6-11.

## Patentansprüche

1. Verfahren, das von einer Benutzervorrichtung durchgeführt wird, wobei das Verfahren Folgendes umfasst:
Melden (300) von Mobilitätsinformationen bei einem verknüpften Netzwerk und
Angeben (310) von einer oder mehreren Zeitperioden, in denen sich die Benutzervorrichtung außerhalb der Dienstabdeckung des Netzwerks befand, wobei das Angeben das Hinzufügen einer Kennung zu den Mobilitätsinformationen, um eine Zeit anzugeben, die von der Benutzervorrichtung außerhalb der Dienstabdeckung des Netzwerks verbracht wurde, umfasst, wobei die Angabe der einen oder der mehreren Zeitperioden, in denen sich die Benutzervorrichtung außerhalb der Dienstabdeckung des Netzwerks befand, in der Mobilitätsinformationsmeldung beinhaltet ist.

2. Verfahren nach Anspruch 1, wobei die Mobilitätsinformationen eine Mobilitätszustandsschätzung MSE umfassen.

3. Verfahren nach Anspruch 1 oder 2, wobei die Mobilitätsinformationen Mobilitätsverlaufsinformationen umfassen.

4. Verfahren nach einem der Ansprüche 1-3, wobei das Angeben ferner das Angeben einer akkumulierten Gesamtaußerdienstzeit für die Benutzervorrichtung umfasst.

5. Verfahren nach Anspruch 3, wobei die Verlaufsinformationen ferner einen Satz von Zellkennungen und Außerdienstangaben, die mit der in einer Zelle oder außerhalb der Abdeckung verbrachten Zeit verknüpft sind, umfassen.

6. Verfahren das von einem Netzwerkknoten durchgeführt wird, wobei das Verfahren Folgendes umfasst:
Empfangen (400) von Mobilitätsinformationen von einer Benutzervorrichtung, die mit einem Netzwerk verknüpft ist;
wobei das Empfangen der Mobilitätsinformationen ferner das Empfangen (410) einer Angabe von einer oder mehreren Zeitperioden, in denen sich die Benutzervorrichtung außerhalb der Dienstabdeckung des Netzwerks befand, und das Empfangen einer Kennung in den Mobilitätsinformationen zum Angeben einer Zeit, die von der Benutzervorrichtung außerhalb der Abdeckung des Netzwerks verbracht wurde, umfasst.

7. Verfahren nach Anspruch 6, wobei die Mobilitätsinformationen eine Mobilitätszustandsschätzung MSE umfassen.

8. Verfahren nach Anspruch 6 oder 7, wobei die Mobilitätsinformationen Mobilitätsverlaufsinformationen umfassen.

9. Verfahren nach einem der Ansprüche 6-8, wobei das Empfangen ferner das Empfangen einer akkumulierten Gesamtaußerdienstzeit für die Benutzervorrichtung umfasst.

10. Verfahren nach Anspruch 8, wobei die Verlaufsinformationen ferner einen Satz von Zellkennungen und Außerdienstangaben, die mit der in einer Zelle oder außerhalb der Abdeckung verbrachten Zeit verknüpft sind, umfassen.

11. Verfahren nach einem der Ansprüche 6-10, wobei der Netzwerkknoten einen Evolved Node B eNB umfasst.

12. Einrichtung, die Mittel zum Durchführen der Schritte eines Verfahrens nach einem der Ansprüche 1-5 oder einem der Ansprüche 6-11 umfasst.

13. Nichttransitorisches computerlesbares Medium, das mit Anweisungen codiert ist, die, wenn sie von einem Prozessor, der mit einer Benutzervorrichtung oder einem Netzwerkknoten verknüpft ist, ausgeführt werden, die entsprechenden Schritte des Verfahrens nach einem der Ansprüche 1-5 bzw. einem der Ansprüche 6-11 durchführen.

## Revendications

1. Procédé effectué par un dispositif d'utilisateur, le procédé comprenant les étapes suivantes :
rapporter (300) des informations de mobilité à un réseau associé ; et
indiquer (310) une ou plusieurs périodes de temps pendant lesquelles le dispositif d'utilisateur a été hors de la couverture de service du réseau, dans lequel l'indication comprend l'ajout d'un identifiant aux informations de mobilité pour indiquer un temps passé par le dispositif d'utilisateur hors de la couverture de service du réseau, dans lequel l'indication des une ou plusieurs périodes de temps pendant lesquelles le dispositif d'utilisateur a été hors de la couverture de service du réseau est incluse dans le rapport d'informations de mobilité.

2. Procédé selon la revendication 1, dans lequel les informations de mobilité comprennent une estimation de l'état de mobilité, MSE.

3. Procédé selon la revendications 1 ou 2, dans lequel les informations de mobilité comprennent des informations d'historique de mobilité.

4. Procédé selon l'une quelconque des revendications 1 à 3, dans lequel l'indication comprend en outre l'indication d'un temps hors service total accumulé pour le dispositif d'utilisateur.

5. Procédé selon la revendication 3, dans lequel les informations d'historique comprennent en outre un ensemble d'identifiants de cellule et d'indications de mise hors service associé au temps passé dans une cellule ou hors couverture.

6. Procédé effectué par un nœud de réseau, le procédé comprenant les étapes suivantes :
recevoir (400) des informations de mobilité d'un dispositif d'utilisateur associé à un réseau ;
dans lequel la réception des informations de mobilité comprend en outre la réception (410) d'une indication d'une ou plusieurs périodes de temps pendant lesquelles le dispositif d'utilisateur a été hors de la couverture de service du réseau et la réception d'un identifiant dans les informations de mobilité pour indiquer un temps passé par le dispositif d'utilisateur hors de la couverture du réseau.

7. Procédé selon la revendication 6, dans lequel les informations de mobilité comprennent une estimation de l'état de mobilité, MSE.

8. Procédé selon la revendications 6 ou 7, dans lequel les informations de mobilité comprennent des informations d'historique de mobilité.

9. Procédé selon l'une quelconque des revendications 6 à 8, dans lequel la réception comprend en outre la réception d'un temps hors service total accumulé pour le dispositif d'utilisateur.

10. Procédé selon la revendication 8, dans lequel les informations d'historique comprennent en outre un ensemble d'identifiants de cellule et d'indications de mise hors service associé au temps passé dans une cellule ou hors couverture.

11. Procédé selon l'une quelconque des revendications 6 à 10, dans lequel le nœud de réseau comprend un nœud B évolué eNB.

12. Appareil comprenant des moyens pour effectuer les étapes d'un procédé selon l'une quelconque des revendications 1 à 5 ou l'une quelconque des revendications 6 à 11.

13. Support non transitoire lisible par ordinateur codé avec des instructions qui, lorsqu'elles sont exécutées par un processeur associé à un dispositif d'utilisateur ou à un nœud de réseau, effectuent respectivement les étapes correspondantes des revendications 1 à 5 ou de l'une quelconque des revendications 6 à 11.
